(19) Europäisches Patentamt

European Patent Office

Office européen des brevets

(11) **EP 0 459 111 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int Cl.⁶: **G12B 5/00**, G02B 7/00

(21) Anmeldenummer: **91105511.9**

(22) Anmeldetag: **08.04.1991**

(54) **Justierbare Aufhängung**

Adjustable suspension

Suspension ajustable

(84) Benannte Vertragsstaaten:
**CH DE FR GB IT LI NL SE**

(30) Priorität: **01.06.1990 CH 1861/90**

(43) Veröffentlichungstag der Anmeldung:
**04.12.1991 Patentblatt 1991/49**

(73) Patentinhaber: **Gerber, Peter**
**CH-8965 Berikon (CH)**

(72) Erfinder: **Gerber, Peter**
**CH-8965 Berikon (CH)**

(74) Vertreter: **Blum, Rudolf Emil Ernst**
**CH-8044 Zürich (CH)**

(56) Entgegenhaltungen:
EP-A- 0 155 861          EP-A- 0 158 173
US-A- 4 408 830

- PATENT ABSTRACTS OF JAPAN vol. 7, no. 64 (P-183)(1209) 17 März 1983,& JP-A-57 208517
- PATENT ABSTRACTS OF JAPAN vol. 9, no. 62 (P-342)(1785) 19 März 1985 & JP-A-59 195604

**Beschreibung**

Die Erfindung betrifft eine justierbare Aufhängung für eine Einrichtung, die eine Raumachse festlegt, wobei die Aufhängung eine Halterung für die Einrichtung besitzt, welche mittels Stellschrauben an einem Gehäuse befestigt ist. Insbesondere bei optischen Geräten ist es von zentraler Bedeutung, die Raumachsen, d.h. ihre optischen Achsen, möglichst exakt justieren zu können. Eine solche Justierung soll dabei auf einfache Weise erfolgen können. Die entsprechenden Mittel müssen ferner so ausgestaltet sein, dass die einmal eingestellte Lage auch beibehalten wird und reproduzierbar ist. Schliesslich soll die Justierung sowohl eine Parallelverstellung der optischen Achse als auch eine Verschwenkung derselben um einen definierten Winkel ermöglichen.

Es stellt sich erfindungsgemäss die Aufgabe, eine Aufhängung zu schaffen, welche diese Anforderungen auf konstruktiv einfache Weise erfüllt. Diese Aufgabe wird erfindungsgemäss durch die in den Patentansprüchen genannten Merkmale gelöst.

Mit einer solchen Aufhängung gelingt es, eine präzise, spielarme und beliebig verstellbare Justierung für optische Einrichtungen, insbesondere für Laserdioden zu realisieren. Die entsprechende Aufhängung ist äusserst platzsparend, so dass sie sich auch für kleine Geräte eignet.

Der Aufbau und die Funktionsweise dieser Aufhängung sowie weitere Eigenschaften derselben, werden nachfolgend anhand von Ausführungsbeispielen näher beschrieben. Dazu wird insbesondere auf die Zeichnungen verwiesen, worin zeigen:

Fig. 1 eine erste Ausführung in schematischer Darstellung;

Fig. 2 eine zweite Ausführung in schematischer Darstellung;

Fig. 3 die zweite Ausführung zur Erläuterung des konstruktiven Aufbaus;

Fig. 4 eine Ansicht des offenen Gehäuses in Richtung der optischen Achse;

Fig. 5 eine entsprechende Ansicht in vergrösserter Schnittdarstellung;

Fig. 6 eine Schnittdarstellung entlang der Linie VI - VI in Figur 5, und

Fig. 7 eine Schnittdarstellung entlang der Linie VII - VII in Figur 5.

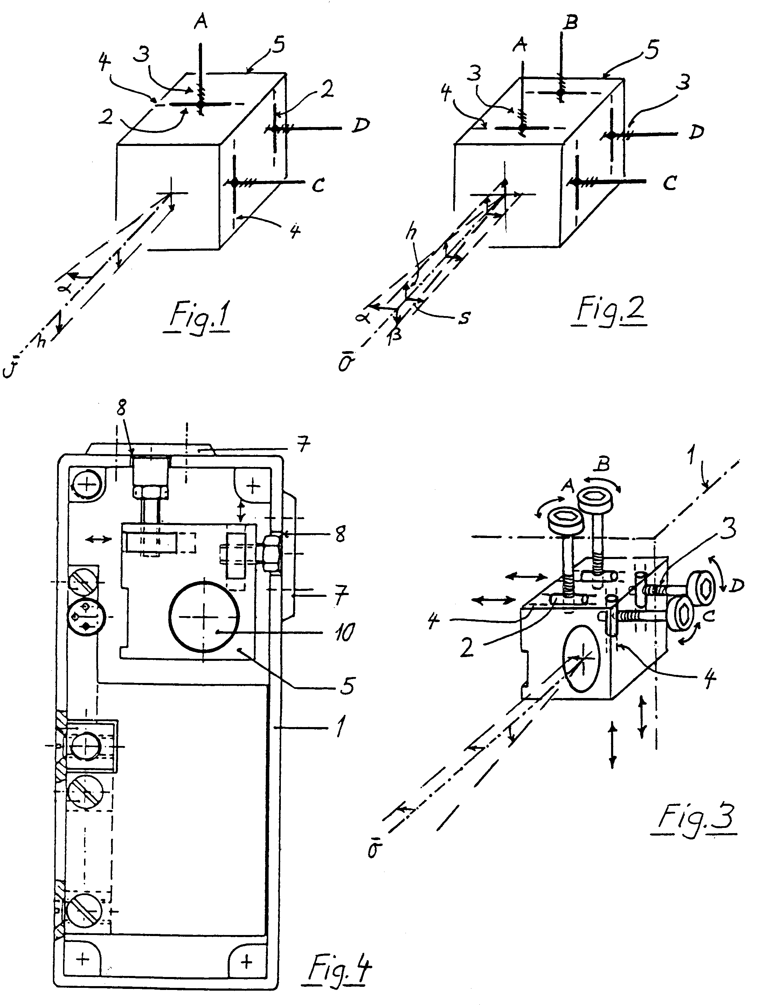

Anhand der drei Figuren 1 bis 3 soll zunächst in schematischer Weise der geometrische Aufbau und die Funktion der erfindungsgemässen Aufhängung erläutert werden. Die Stellschrauben werden darin mit A, B, C, D bezeichnet und das Gehäuse 1, in welchem diese drehbar gelagert sind, ist weggelassen (bzw. in Figur 3 strichpunktiert angedeutet). Die Halterung 5 für eine optische Einrichtung, von der nur die optische Achse $\overline{O}$ gezeigt ist, ist als quaderförmiger Block schematisch gezeigt. Jede Stellschraube besitzt einen Gewindeteil 3, mit welchem sie in einen Kupplungskörper 2 eingreift. Die Kupplungskörper 2, welche in den Figuren 1 und 2 schematisch nur durch Striche angedeutet sind, sind in Nuten 4 in der Halterung 5 gehalten und darin in Längsrichtung verschiebbar, wie nachfolgend noch im Detail erläutert wird. Sie sind ferner darin um die Längsrichtung leicht schwenkbar. In Richtung der jeweils zugehörigen Stellschraube sind sie jedoch formschlüssig in den Nuten 4 gehalten.

Die Stellschrauben A bis D sind am Gehäuse 1 drehbar und in axialer Richtung feststehend gelagert. Wird an einer Stellschraube gedreht, so verschiebt sich demzufolge der in der Nut 4 gehaltene Kupplungskörper 2 auf dem Gewindeteil 3 der Stellschraube, womit an dieser Stelle die Halterung 5 in Richtung der Stellschraubenachse verschoben wird.

Die Anordnung der Stellschrauben A bis D bzw. der zugehörigen Kupplungskörper 2 und Nut 4 in der Halterung 5 ist nun so getroffen, dass sich diese beim Verstellen jeder einzelnen Stellschraube in definierter Weise im Raum bewegt.

Dies soll zunächst anhand der Ausführung von Figur 1 mit drei Stellschrauben A, C, D erläutert werden.

Wird die Stellschraube A verstellt, so erfolgt eine Parallelverschiebung der Halterung 5 in der Richtung dieser Stellschraube. Die Stellschrauben C und D bzw. ihre Kupplungskörper dienen dabei als Längsführung. Die optische Achse $\overline{O}$ wird um einen Betrag h parallel zu sich selbst verschoben.

Werden die Stellschrauben C und D gegenläufig verstellt, so schwenkt die Halterung 5 in der Horizontalebene um die Stellschraube A als Schwenkachse. Die optische Achse $\overline{O}$ according to claim 1. wird um einen Winkel $\alpha$ in der Horizontalebene verschwenkt. Die Stellschraube A dient dabei als Führung in der Horizontalebene.

Wie sich aus geometrischen Gründen sogleich ergibt, kann die optische Achse $\overline{O}$ mit der Anordnung von Figur 1 zwar horizontale und vertikale Parallelverschiebungen ausführen, jedoch nur in der Horizontalebene verschwenkt werden.

In Figur 2 ist eine Anordnung mit je zwei Stellschrauben A, B bzw. C,D für jede Justierrichtung dargestellt, welche zusätzlich auch eine Verschwenkung der optischen Achse $\overline{O}$ in einer Vertikalebene gestattet. Dazu ist zum Beispiel die Stellschraube B zu verstellen, wodurch die Halterung 5 geringfügig um den Kupplungskörper der Stellschraube A als Schwenkachse geschwenkt wird. Entsprechend wird die optische Achse um einen Winkel $\beta$ in der Vertikalebene verschwenkt.

Insgesamt ist in dieser Anordnung also eine Parallelverstellung der optischen Achse $\overline{O}$ in der Vertikalen h und in der Horizontalen S, sowie eine Verschwenkung β in der Vertikalen und α in der Horizontalen möglich. Parallelverschiebungen setzen dabei natürlich die Verstellung eines Stellschraubenpaares A, B bzw. C,D voraus. Durch Ueberlagerung mehrerer solcher Verstellungen kann die optische Achse $\overline{O}$ damit innerhalb eines Einstellspiel raumes in beliebige Lagen gebracht und in dieser Lage fixiert werden.

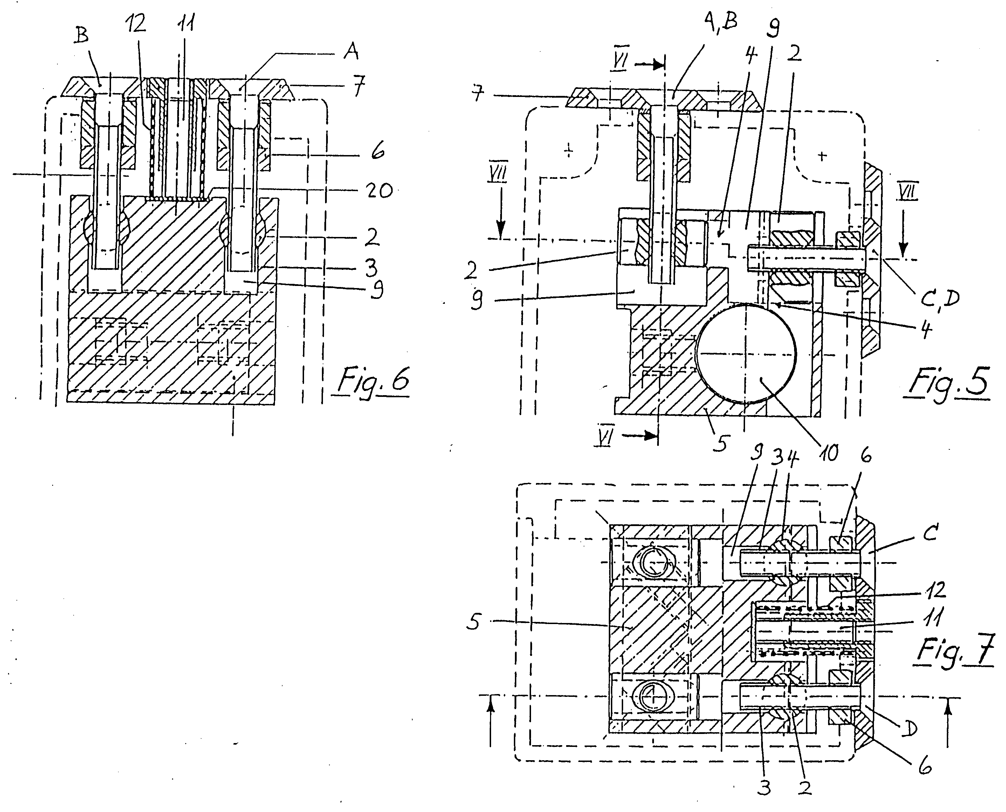

Nachdem bisher erfindungsgemässe Anordnungen lediglich schematisch dargestellt wurden, soll nun anhand der Figuren 4 bis 7 eine konstruktive Ausführung der in Figur 2 und 3 gezeigten Ausführung beschrieben werden. Figur 4 zeigt (leicht vergrössert) eine Ansicht des offenen Gehäuses 1 in Richtung der optischen Achse $\overline{O}$ einer Laserdiode 10, welche in einer entsprechenden Ausnehmung in der Halterung 5 befestigt ist. Die Halterung 5 ist in Figur 5 in der entsprechenden Lage im Schnitt (und nochmals etwas vergrössert) gezeigt. Die Figuren 6 und 7 stellen entsprechend eingezeichnete Schnitte durch die Halterung, einschliesslich der Stellschrauben dar. Für deren Anordnung kann auf die Figur 3 verwiesen werden, so dass darauf nicht mehr eingegangen wird. Jede Stellschraube A bis D ist mit einer Gegenmutter 6 drehbar in einer Halteplatte 7 gehalten, wobei jede Halteplatte 7 zwei Stellschrauben trägt. Die Halteplatten 7 ihrerseits werden am Gehäuse 1 festgeschraubt. Diese Konstruktion besitzt den Vorteil, dass die Stellschrauben bereits vollständig an den Halteplatten vormontiert und mit der Halterung 5 verbunden werden können, wonach die fertige Baugruppe insgesamt ins Gehäuse 1 eingeschoben und daran festgeschraubt wird. In Figur 4 sind entsprechende Einschubschlitze 8 am Gehäuse ersichtlich.

Die Halterung 5 ist als quaderförmiger Block mit verschiedenen, sich aus den Figuren ergebenden Durchbrechungen aufgebaut. Eine zentrale Ausnehmung dient zur Aufnahme einer Laserdiode 10, welche mit Feststellschrauben darin befestigt ist. Entlang der Flächen, welche mit den Stellschrauben zusammenwirken, verlaufen in diesem Block jeweils zwei parallele Nuten 4 mit kreisförmigem Querschnitt (vergl. dazu Fig. 6 und 7). Im Bereich dieser Nuten 4 sind schlitzförmige Ausnehmungen 9 vorgesehen, in denen sich die Stellschrauben A bis D selbst verschieben können. In jeder Nut 4 ist ein Kupplungskörper 2 geführt, der als zylindrischer Bolzen mit einem Innengewinde ausgebildet ist, das mit dem Gewindeteil 3 der entsprechenden Stellschraube zusammenwirkt. Wie sich insbesondere aus den Figuren 6 und 7 ergibt, lässt sich die Stellschraube geringfügig um die Achse des Kupplungskörpers 2 verschwenken. Der Kupplungskörper 2 lässt sich ferner längs seiner Nut 4 verschieben, ist aber quer dazu formschlüssig in der Nut gehalten. Damit dient jeder Kupplungskörper für die entsprechende Stellschraube als Längsführung in Nutrichtung, als Schwenklager um die Nutrichtung und als formschüssige Fixierung quer zur Nutrichtung, womit sich die beschriebenen Justierbewegungen ausführen lassen.

Wie sich geometrisch ergibt, legen die Stellschrauben, ist ihre Lage einmal justiert, eine eindeutige Lage der Halterung 5 bezüglich dem Gehäuse 1 fest.

Treten Erschütterungen auf, besteht jedoch die Gefahr, dass sich die Stellschrauben selbsttätig drehen. Um dies auszuschliessen, ist in jeder Justierrichtung eine Fixierschraube 11 vorgesehen, welche mit einem Gewinde versehen ist, das mit einem entsprechenden Innengewinde an der Halteplatte 7 zusammenwirkt. Die Fixierschraube 11 kann soweit eingeschraubt werden, dass ihr vorderes Ende gegen eine Fläche 20 an der Halterung 5 drückt. Damit kann die Halterung in der jeweils richtig justierten Lage durch leichte Vorspannung mittels der Fixierschrauben 11 gesichert werden.

Im Bereich der Fixierschrauben 11 sind ferner Druckfedern 12 zwischen jeder Halteplatte 7 und der Halterung 5 angeordnet, welche beim Justiervorgang das Spiel der Kupplungskörper 2 in den Nuten 4 im gleichen Sinne nehmen sollen, wie danach die Fixierschrauben 11. Damit lässt sich ausschliessen, dass sich die einmal eingestellte Lage der Halterung 5 beim Anziehen der Fixierschrauben wieder verändert.

Wie sich aus den Figuren 1 und 2 ergibt, sind verschiedene, geometrische Anordnungen der Stellschrauben je nach beabsichtigter Anwendung möglich. Gemäss Fig. 1 ist z.B. eine Verschwenkung der optischen Achse $\overline{O}$ lediglich in der Horizontalebene möglich. Werden, wie in Figur 2 pro Justierrichtung je zwei Stellschrauben verwendet, so ist die Verstellbarkeit innerhalb des geometrisch möglichen Verstellbereichs beliebig.

Eine Anwendung der beschriebenen, justierbaren Aufhängung betrifft Laser-Lichtschranken zur Ueberwachung industrieller Prozesse. Insbesondere in der Textilindustrie stellt sich bei Fadenüberwachungen das Problem der präzisen Justierung des Ueberwachungsstrahls auf die entsprechende Maschine. Dies gelingt mit der vorliegenden Aufhängung auf optimale Weise.

**Patentansprüche**

1. Justierbare Aufhängung für eine Einrichtung, die eine Raumachse $\overline{O}$ festlegt, mit einer Halterung (5) for die Einrichtung (10), welche mittels Stellschrauben an einem Gehäuse (1) befestigt ist, dadurch gekennzeichnet, dass zwei zueinander rechtwinklig und quer zur genannten Raumachse ($\overline{O}$) verlaufende Justierrichtungen vorgesehen sind, und dass in der einen Justierrichtung mindestens eine sowie in der anderen Justierrichtung zwei Stellschrauben (A, C und D bzw. A bis D) verlaufen, wobei die Stellschrauben (A, C und D bzw. A bis D) drehbar am Gehäuse (1) gelagert sind, und jede Stellschraube derart mit der Halterung (5) zusammenwirkt, dass sie bezüglich ihrer Justierrichtung darin formschlüssig gehalten und längs der jeweils anderen Justierrichtung darin verschiebbar ist.

**2.** Justierbare Aufhängung nach Anspruch 1, dadurch gekennzeichnet, dass in beiden Justierrichtungen je zwei Stellschrauben (A, B bzw. C, D) vorgesehen sind.

**3.** Justierbare Aufhängung nach einem der vorangehenden Ansprüche, dadurch gekennzeichnet, dass jede Stellschraube (A, C und D bzw. A bis D) einen Gewindeteil (3) aufweist, der in einen Kupplungskörper (2) eingreift, welcher in einer entsprechenden in der Halterung (5) angeordneten Nut (4) gehalten ist derart, dass er in der Nutlängsrichtung verschieblich und um die Nutlängsrichtung schwenkbar ist.

**4.** Justierbare Aufhängung nach Anspruch 3, dadurch gekennzeichnet, dass die Nutenwandungen konkave, kreisabschnittförmige Führungsbahnen und die Kupplungskörper (2) entsprechend geformte konvexe Flanken aufweisen.

**5.** Justierbare Aufhängung nach einem der vorangehenden Ansprüche, dadurch gekennzeichnet, dass die Stellschrauben (A, C und D bzw. A bis D) im Gehäuse (1) mit fester Achsrichtung drehbar gelagert sind und die Halterung (5) gegen das Gehäuse abstützen.

**6.** Justierbare Aufhängung nach einem der vorangehenden Ansprüche, dadurch gekennzeichnet, dass die Halterung (5) in den Justierrichtungen durch je eine Feder (12) gegenüber dem Gehäuse (1) abgestützt ist, um das Spiel der Kupplungskörper in den Nuten zu nehmen.

**7.** Justierbare Aufhängung nach einem der vorangehenden Ansprüche, dadurch gekennzeichnet, dass in jeder Justierrichtung je eine Fixierschraube (11) vorgesehen ist, welche in einem Gewinde im Gehäuse verankert und darin nach erfolgter Justierung gegen die Halterung schraubbar ist, bis sie sich darauf abstützt.

**8.** Justierbare Aufhängung nach Anspruch 3, dadurch gekennzeichnet, dass die Nut (4) zu einer in der einen Justierrichtung verlaufenden Stellschraube sich jeweils in der anderen Justierrichtung erstreckt.

**9.** Justierbare Aufhängung nach Anspruch 8, dadurch gekennzeichnet, dass die Halterung (5) als quaderförmiger Block ausgebildet ist, in welchem sich die Nuten (4) paarweise längs zweier aneinander stossender Seiten erstrecken.

## Claims

**1.** Adjustable suspension for an apparatus defining a space axis ($\bar{0}$) with a holder (5) for the apparatus (10), which is attached to a housing (1) by means of adjusting screws, characterised in that two directions of adjustment extending perpendicularly to each other and transversely to said space axis ($\bar{0}$) are provided and that at least one adjusting screw (A, C and D or A to D, respectively) is extending into the one and two into the other direction of adjustment, wherein the adjusting screws (A, C and D or A to D, respectively) are pivotally supported on the housing (1) and each adjusting screw cooperates such with the holder (5) that it is positively held therein in respect to its direction of adjustment and slideable therein along the corresponding other direction of adjustment.

**2.** Adjustable suspension of claim 1 characterised in that two adjusting screws (A, B and C, D, respectively) are provided in both directions of adjustment.

**3.** Adjustable suspension of one of the preceding claims characterised in that each adjusting screw (A, C and D or A to D, respectively) comprises a threading section (3) engaging a coupling body (2), which is held in a corresponding notch (4) arranged in the holder (5) such that it is slideable in the longitudinal notch direction and pivotal about the longitudinal notch direction.

**4.** Adjustable suspension of claim 3 characterised in that the notch walls comprise concave, circle-section-shaped guiding tracks and the coupling bodies (2) convex sides formed correspondingly.

**5.** Adjustable suspension of one of the preceding claims characterised in that the adjusting screws (A, C and D or A to D, respectively) are pivotally supported in the housing (1) with a fixed axial direction and support the holder (5) against the housing.

**6.** Adjustable suspension of one of the preceding claims characterised in that the holder (5) is supported in each direction of adjustment towards the housing (1) by a spring (12) for avoiding a backlash of the coupling bodies in the notches.

**7.** Adjustable suspension of one of the preceding claims characterised in that a locking screw (11) is provided in each direction of adjustment, which is anchored in a threading in the housing and can be screwed therein against the holder until it is abutting thereon.

**8.** Adjustable suspension of claim 3 characterised in that the notch (4) for a screw extending in one direction of adjustment is extending in the corresponding other direction of adjustment.

**9.** Adjustable suspension of claim 8 characterised in that the holder (5) is designed as a rectangularly shaped block in which the notches (4) are extending in pairs along two neighbouring faces.

## Revendications

1.  Suspension réglable pour un dispositif déterminant un axe (O) dans l'espace, avec un support (5) pour le dispositif (10) maintenu par des vis d'ajustage dans un boîtier (1), caractérisée en ce qu'il est prévu deux directions d'ajustage mutuellement orthogonales et transversales par rapport à l'axe (O), qu'au moins une vis est orientée en une des directions d'ajustage et que deux vis sont orientées dans l'autre direction d'ajustage, les vis d'ajustage (A, C et D, respectivement A à D) pouvant tourner dans le boîtier (1), chaque vis coopérant avec le support (5) de manière à y être maintenue mécaniquement en sa direction d'ajustage et à pouvoir se déplacer par rapport au boîtier dans l'autre.

2.  Suspension réglable selon la revendication 1, caractérisée en ce qu'elle comporte deux vis d'ajustage (A, B, respectivement C, D) dans chacune des directions d'ajustage.

3.  Suspension réglable selon une des revendications précédentes, caractérisée en ce que chaque vis d'ajustage (A, C et D, respectivement A à D) comporte une partie filetée (3) engagée dans une pièce d'accouplement (2) maintenue dans une rainure correspondante (4) pratiquée dans le support (5) de manière à pouvoir se déplacer en direction longitudinale de la rainure et à pouvoir basculer autour de la direction longitudinale de la rainure.

4.  Suspension réglable selon la revendication 3, caractérisée en ce que les parois de la rainure comportent des parties formant des guides concaves en forme d'arc de cercle et les pièces d'accouplement (2) des flancs convexes de forme complémentaire.

5.  Suspension réglable selon une des revendications précédentes, caractérisée en ce que les vis d'ajustage (A, C et D, respectivement A à D) sont montées à rotation autour d'un axe fixe dans le boîtier (1) et qu'elles maintiennent le support (5) par rapport au boîtier.

6.  Suspension réglable selon une des revendications précédentes, caractérisée en ce que le support (5) est maintenu par rapport au boîtier (1) en chaque direction d'ajustage par un ressort (12) afin de neutraliser le jeu des pièces d'accouplement (2) dans les rainures.

7.  Suspension réglable selon une des revendications précédentes, caractérisée en ce qu'une vis de fixation (11) est prévue en chaque direction d'ajustage, cette vis étant ancrée dans un filetage du boîtier et pouvant être vissée dans celui-ci en direction du support après l'ajustage jusqu'à ce qu'elle s'appuye contre ledit support.

8.  Suspension réglable selon la revendication 3, caractérisée en ce que chaque rainure (4) associée à une vis de réglage s'étendant en une direction d'ajustement s'étend en l'autre direction d'ajustement.

9.  Suspension réglable selon la revendication 8, caractérisée en ce que le support (5) forme un parallélépipède dans lequel les rainures (4) s'étendent par paires le long de deux faces voisines.

_Fig.1_

_Fig.2_

_Fig.3_

_Fig.4_

6

Fig. 5

Fig. 6

Fig. 7